# EUROPÄISCHE PATENTANMELDUNG

(11) **EP 2 284 418 A2**
(43) Veröffentlichungstag der Anmeldung: **16.02.2011**
(21) Anmeldenummer: 10172660.2
(22) Anmeldetag: 12.08.2010
(51) Int. Cl.: F16F 15/03, F16F 15/26

(54) **Antrieb für einen Verbrennungsmotor**

(30) Priorität: 12.08.2009 DE 102009037000
(71) Anmelder: A. T. Süd GmbH, 85101 Lenting (DE)
(72) Erfinder: Neugärtner, Jörg, 93051 Regensburg (DE); Scharlach, Albert, 85129 Oberdolling (DE)
(74) Vertreter: Cremer, Christian

(57) **Zusammenfassung**

Die Erfindung bezieht sich auf einen Steuertrieb für einen Verbrennungsmotor mit einer Kurbelwelle, mindestens einer Nockenwelle, wenigstens zwei Rädern, von denen ein Rad mit der Kurbelwelle verbunden ist und von denen ein Rad mit der Nockenwelle verbunden ist, die Teil eines Getriebes sind, über welches das erste Rad und das mindestens eine zweite Rad miteinander verbunden sind. Es ist ein Elektromotor mit einer Steuereinrichtung vorgesehen, der versetzt von der Kurbelwelle und der mindestens einen Nockenwelle, sowie versetzt zu dem zugehörigen ersten Rad und dem zugehörigen zweiten Rad, mittels eines Zwischenrades als Teil des Getriebes mit den Rädern in Verbindung steht. Der Elektromotor weist eine Generatorwelle auf, an welcher mindestens ein Ausgleichsgewicht für einen Massenausgleich angeordnet ist, wodurch freie Massenkräfte erster oder zweiter Ordnung im Steuertrieb kompensierbar sind.

## Beschreibung

Die Erfindung bezieht sich auf einen Antrieb für einen Verbrennungsmotor, mit einer Kurbelwelle, mindestens einer Nockenwelle und wenigstens zwei Rädern. Die Räder sind mit der Kurbelwelle verbunden. Sie sind jeweils Teil eines Getriebes. Eines der Räder ist Teil eines Steuertriebs.

### Darlegung des technischen Gebiets

Die auf den Kolben einer Verbrennungskraftmaschine wirkenden periodisch veränderlichen Gaskräfte und die periodischen Massenwirkungen der Triebwerksteile erzeugen zusammen an den Kurbelzapfen eine tangential wirkende Kraftkomponentensumme, die multipliziert mit dem Kurbelradius ein periodisch änderndes Drehmoment ergibt, welches auf die Kolbenfläche und den Kurbelradius bezogen einen von der Motorgröße unabhängigen Wert, den sog. Tangentialdruck, darstellt, dessen Verlauf über der Kurbelstellung eine der wichtigsten Kennlinien zur Beurteilung des dynamischen Verhaltens von Motoren ist.

Bei Mehrzylindermotoren überlagern einander die Tangentialdruckverläufe der Einzelzylinder mit sich aus Zylinderzahl, Zylinderanordnung, Kurbelanordnung und Zündfolge ergebenden Phasenverschiebungen. Der Summenverlauf ist charakteristisch für die Motorbauart, wie Reihenmotor, V-Motor, Sternmotor etc., und erstreckt sich über ein volles Arbeitsspiel, beim Viertakthubkolbenmotor also über zwei Kurbelwellenumdrehungen.

Der Summenverlauf wird auch Drehkraftdiagramm genannt, welches mittels Überlagerung einer Reihe harmonisch zerlegter Sinusschwingungen mit ganzzahligen Vielfachen der Grundfrequenzen, den "Drehkraftharmonischen", rekonstruiert werden kann. Bezogen auf die Motordrehzahl nennt man diese Vielfachen auch Ordnungen. Beim Viertakthubkolbenmotor beispielsweise ergeben sich auch halbe Ordnungen, z. B. die 0.5-te Ordnung.

In jedem Fall erzeugt die veränderliche Drehkraft von Hubkolbenmotoren über dem Arbeitsspiel eine ungleichförmige Drehgeschwindigkeit am Kurbelwellenende, die durch einen Energiespeicher, wie das Schwungrad, auf ein anwendungsgerechtes Maß zurückgeführt werden kann.

Durch die Gaskräfte, insbesondere durch die von den Gaskräften ursächlich bewirkten Drehkraftverläufe, werden somit in einem Verbrennungsmotor Massen, wie der Kurbeltrieb, bestehend aus den Kolben, den Pleueln, der Kurbelwelle etc., der Ventiltrieb, bestehend aus der Nockenwelle, den Nocken, gegebenenfalls Nockenwellenverstellern, Ventilen, wie Einlass -bzw. Auslassventilen, etc., das Schwungrad etc., zu rotatorischen bzw. gemischt translatorisch-rotatorischen Bewegungen und zu Vibrationen angeregt, deren charakteristische Ausprägungen für Fahrer und Passagiere eines verbrennungsmotorgetriebenen Fahrzeuges als NVH-Qualität perzipierbar sind. "NVH" steht für die in Fachkreisen gebräuchliche englische Abkürzung für "noise, vibration, harshness" und somit für die fühlbaren und hörbaren Vibrationen und Geräusche, welche von den Bewegungs- und Verformungskomponenten des Motors in unterschiedlichen Frequenzbereichen herrühren. Treten Anregungen bei Resonanzfrequenzen der Motor- bzw. Fahrzeugstruktur auf, so bewirkt dies regelmäßig besonders deutlich und meist als unangenehm empfundene Vibrations- und Geräuschphänomene.

Die Verbindung von Kurbeltrieb und Ventiltrieb wird als Steuertrieb bezeichnet, über den sich die besagten Phänomene fortpflanzen können. Die Verbindung kann beispielsweise durch ein Getriebe mit Rädern, wie Zahnräder, Kettenräder, Riemenscheiben etc., bewirkt sein. Das Getriebe kann auch eine Mischform sein, welche die nicht abschließend aufgezählten Radtypen in beliebiger vorteilhafter Kombination aufweist. In den Steuertrieb sind regelmäßig weitere Komponenten, wie beispielsweise eine Lichtmaschine bzw. ein Starter, eingebunden. Auch die Kombination einer Lichtmaschine, d. h. eines elektrischen Generators, mit einem Starter, d. h. einem Elektromotor, in einer Einheit kann mit einem Steuertrieb antriebsmäßig verbunden sein. Man spricht bei solchen elektromagnetischen Energiewandlern im Automobilbereich von sog. Starter-Generatoren. Konventionell wird der Starter-Generator in den Riementrieb oder in den Kettentrieb verbaut. Über die Verbindungen des Steuertriebes werden Anregungen vom Kurbeltrieb her in den Ventiltrieb und in die in den Steuertrieb eingebunden Komponenten, wie die Räder, die Steuerriemen bzw. -ketten, den Starter-Generator, und über deren Lagerungen bzw. Befestigungen weitergeleitet.

Daneben sind Motoren bekannt, die einen Steuertrieb und einen oder mehrere weitere Antriebe haben. Teilweise ist der Steuertrieb auf ein Minimum reduziert, was bedeutet, dass die Kurbelwelle über den Steuertrieb unmittelbar auf die Nockenwelle einwirkt. Nebenaggregate der Verbrennungskraftmaschine befinden sich in weiteren Antrieben, die ggf. auf die Kurbelwelle als Antriebswelle zurückgehen.

Durch konstruktiv oder fertigungsbedingt unwuchtige Massenverteilungen bzw. ungleichförmige Bewegungen, wie rotatorische bzw. gemischt translatorisch-rotatorische Bewegungen, insbesondere im Kurbeltrieb, treten Massenkräfte bzw. Massenmomente auf, die sich den eingeprägten Gaskräften bzw. von diesen bewirkten Drehmomenten überlagern. Massenkräfte können beispielsweise oszillierende Massenkräfte sein. Massenkräfte wachsen mit dem Quadrat der Winkelgeschwindigkeit bzw. der Motordrehzahl. Massenmomente überlagern sich den von den pulsierenden Kraftverläufen der Gaskräfte bewirkten Drehmomenten des Verbrennungsmotors und führen unter anderem zu den besagten Drehzahlschwankungen, welche durch ein Schwungrad reduziert werden können. Eine Möglichkeit des Ausgleichs der Drehungleichförmigkeiten ist der Ausgleich über einen Ein- oder Zweimassenschwungdämpfer, der als Dämpfer auf dem Schwungrad des Motors aufgebracht ist. Dies ist ergänzend zum Massenausgleich (s. unten) teilweise erforderlich. Es kann sich beispielsweise um Drehschwingungsdämpfer aus Gummi oder um hydraulische Drehschwingungsdämpfer handeln.

Bei Mehrzylindermotoren sind die Kraftwirkungen im Inneren und nach außen im Wesentlichen beeinflusst durch die Zylinderzahl, die Zylinderanordnung, die Kröpfungsfolge der Kurbelwelle, die Zündfolge sowie Einzelzylinderparameter. Die freien Massenkräfte und - momente resultieren aus den oszillierenden Massenkräften 1. und 2. Ordnung und werden auf die Motorlagerung übertragen. Die inneren Biegemomente entstehen aus den rotierenden und oszillierenden Massenkräften und beanspruchen das Motorgehäuse. Das aus dem pulsierenden Drehkraftverlauf resultierende Wechseldrehmoment nimmt in der Regel mit höherer Zylinderzahl ab.

Als Massenausgleich bezeichnet man alle Maßnahmen, die die Wirkung der Massenkräfte nach außen kompensieren und somit die NVH-Qualität zu verbessern helfen. Mit anderen Worten versteht der Fachmann unter dem Begriff "Massenausgleich" alle Maßnahmen zum teilweisen oder vollständigen Ausgleich der konstruktiv bedingten Massenkräfte und - momente, kurz konstruktiver Unwuchten, von Kurbeltrieben. Grundsätzlich soll der Massenausgleich möglichst ein großes statisches Moment und ein kleines Trägheitsmoment haben. Treten am Gesamtmotor nach außen keine oder zumindest keine nennenswerten freien Massenkräfte und -momente auf, so liegt ein vollständiger bzw. fast vollständiger äußerer Massenausgleich vor, der durch eine NVH-Qualität von besonderer Laufruhe und Laufkultur gekennzeichnet ist. Dabei können innerhalb der Motorstruktur noch Kräfte und Momente auftreten, die Lagerung und Motorgehäuse belasten, sowie Verformungen und Schwingungen verursachen.

Wenn nachfolgend von Antrieb gesprochen wird, so ist hierunter auch ein Nebenantrieb für z. B. Nebenaggregate gemeint.

### Stand der Technik

Die Bauformen des Massenausgleichs bzw. eines Ausgleichsgetriebes sind entsprechend der Motorbauform zu wählen, beispielsweise als eine Welle mit Ausgleichsgewichten, z. B. beim Sechszylinder-V-Motor, oder beispielsweise als zwei gegenläufig, insbesondere mit doppelter Motordrehzahl, drehende Wellen mit Ausgleichs- bzw. Gegengewichten, z. B. beim Vierzylinder-Reihenmotor. Ebenfalls zu berücksichtigen sind der Hubzapfenversatz und die Kröpfung der Kurbelwelle der gewählten Motorbauform.

Zu den Belastungen aufgrund von Gas- und Massenkräften gehören: Wechseldrehmomente, Querkippmomente und Rückdrehmomente, welche durch Gas-Tangentialkräfte, sowie Massen-Tangentialkräfte bei den Ordnungszahlen 1, 2, 3 und 4 verursacht werden und deren Beeinflussung nur in Ausnahmefällen möglich ist. Weitere Belastungen werden durch freie Massenkräfte hervorgerufen, welche durch nicht ausgeglichene oszillierende Massenkräfte 1. Ordnung bei Ein- und Zweizylinder-Motoren, 2. Ordnung bei Ein-, Zwei- und Vierzylinder-Motoren verursacht werden. Freie Massenmomente, Längskippmomente (um die Querachse), auch als galoppierende Momente bezeichnet, Längskippmomente (um die Hochachse), auch als schlingernde Momente bezeichnet, sind weitere Belastungen, welche durch nicht ausgeglichene Massenkräfte als Kräftepaar 1. und 2. Ordnung verursacht werden. Die Beeinflussung freier Massenkräfte und -momente, sowie der Längskippmomente ist durch Beseitigung der freien Massenwirkungen durch separate rotierende Ausgleichssysteme möglich, jedoch aufwendig und daher selten. Eine Möglichkeit besteht in der Bevorzugung von Kurbelfolgen ohne oder mit nur geringen freien Massenkräften. Innere Biegemomente schließlich werden als Belastungen durch rotierende und oszillierende Massenkräfte verursacht, deren Beeinflussung durch Gegengewichte und durch steife Ausbildung der Motorstruktur, insbesondere des Motorengehäuses, möglich ist. Generell ist es bekannt, Wechseldrehmomente, Querkippmomente, Rückdrehmomente, freie Massenkräfte, freie Massenmomente und Längskippmomente durch Abschirmungen der Umgebung, wie durch elastische Lagerungen des Motors, zumindest in ihrer Wirkung nach außen günstig zu beeinflussen, insbesondere für Ordnungen größer gleich 2. Je wirksamer der Massenausgleich das NVH-Verhalten des Motors verbessern kann, desto geringer fällt die Belastung der Motorlagerungen und der vibrationsbeaufschlagten Motor- und Fahrzeugkomponenten aus und desto angenehmer wird die NVH-Qualität empfunden.

Beanspruchungen durch Massenkräfte im Motor selbst treten trotz Massenausgleich wie angedeutet weiterhin auf. Es ist allgemein bekannt, separate Ausgleichsmassen, wie Gegengewichte bzw. Ausgleichswellen, im oder am Motor zu verbauen, um einen zumindest teilweisen Massenausgleich, wenigstens der niedrigen Ordnungen, wie der 1. bzw. 2. Ordnung, zu erzielen.

Bei einem Einzylindermotor ist beispielsweise mittels zweier Paare rotierender Ausgleichsmassen ein vollständiger Ausgleich der Massenkräfte möglich. Ein solcher Massenausgleich ist jedoch aufwendig und wird nur selten ausgeführt.

Die Massenkraft von Mehrzylindermotoren ist wie angedeutet die Summe der Massenkräfte der einzelnen Zylinder, wobei die hin- und hergehenden Massenkräfte der einzelnen Zylinder in den einzelnen Zylindermittellinien wirken, wodurch sich Massenmomente ergeben können. Für Reihenmotoren ist wegen der parallelen Zylinderanordnung die Ermittlung der Massenkräfte vereinfacht, bei Motoren mit nicht nur parallelen Zylindern, wie z.B. V-Motoren, ist es zweckmäßig, zur Ermittlung der Massenkräfte und -momente eine vollständige Vektorzerlegung anzuwenden.

Beim Dreizylinder-Reihenmotor beispielsweise sind die Massenkräfte beider Ordnungen ausgeglichen, nicht aber die Massenmomente. Ausgeglichene Massenmomente ergeben sich beispielsweise bei in Achsrichtung spiegelsymmetrischen Kurbelwellen. Es bleiben dann nur innere Massenmomente, die wegen der Durchbiegung der Kurbelwelle das Kurbelgehäuse über die Kurbelwellenlager beanspruchen. Symmetrische Kurbelsterne ergeben keine Massenkräfte. Bei einem Reihensechszylinder-Motor sind die Momente und Massenkräfte ausgeglichen. Daher kann hier behauptet werden, dass kein Ausgleichsgetriebe notwendig sei. Ob, und wenn ja, in welcher Größe sich bei Mehrzylindermotoren Massenkräfte bzw. Massenmomente ergeben, hängt insbesondere von der Zylinderzahl, Zylinderanordnung, Kurbelanordnung und der Zündfolge ab. Wie mit Ungleichförmigkeiten, Massenkräfte und Massenmomenten umgegangen werden kann, ist in der Vergangenheit schon in verschiedenen Ansätzen bekannt gemacht worden.

Die DE 10 2006 053 139 A1 (Anmelderin: Compact Dynamics GmbH; Anmeldetag: 10. 11. 2006) beschreibt eine Antriebsvorrichtung mit einem Antriebsaggregat und mit einer elektrischen Maschine, die einen Ständer und einen durch das Antriebsaggregat in Rotation zu versetzenden Läufer umfasst. Die elektrische Maschine arbeitet in einer ersten Betriebsart als Anlassermotor für das Antriebsaggregat, wobei Energie zum Starten des Antriebsaggregats zugeführt wird. In einer zweiten Betriebsart arbeitet sie als Generator zur Energieversorgung von elektrischen Verbrauchern. Der Läufer der elektrischen Maschine ist über ein in seinem Übersetzungsverhältnis veränderbares Getriebe mit dem Antriebsaggregat gekoppelt, wobei die Kopplung formschlüssig realisiert ist. Auf Grund des in seinem Übersetzungsverhältnis veränderbaren Getriebe kann der Fachmann der DE 10 2006 053 139 A1 nach einigen Nachdenken entnehmen, dass in dem Steuertrieb je nach Schaltstellung des Getriebes die Ordnungen der Massenkräfte unterschiedlicher Größe vorliegen müssten.

Aus der DE 10 2006 001 258 A1 (Anmelderin: Compact Dynamics GmbH; Anmeldetag: 10. 01. 2006) ist ein Steuertrieb mit integriertem Elektromotor für einen Verbrennungsmotor, mit einer Kurbelwelle, mindestens einer Nockenwelle, einem mit der Kurbelwelle verbundenen Abtriebsrad, mindestens einem, die zugehörige Nockenwelle antreibenden Antriebsrad und einem das Abtriebsrad und das mindestens eine Antriebsrad miteinander verbindende Getriebe bekannt. Der Elektromotor steht, versetzt von der Kurbelwelle und der mindestens einen Nockenwelle, sowie versetzt zu dem zugehörigen Abtriebsrad und dem zugehörigen mindestens einen Antriebsrad, mittels eines Zwischenrades mit dem Getriebe in Eingriff. Der Elektromotor ist von einer Steuereinrichtung ansteuerbar, wobei abhängig von einem Betriebsparameter bzw. einer Betriebssituation des Getriebes ein zusätzliches Drehmoment bzw. Drehmomentprofil in das Getriebe einbringbar bzw. vom Getriebe abgreifbar ist. Aufgrund der in der Druckschrift DE 10 2006 001 258 A1 gelehrten Grenzen des Getriebes, bedeute es, dass der mindestens eine Betriebsparameter oder die mindestens eine Betriebssituation den Zustand bzw. die Situation des Getriebes widerspiegelt. Im Gegensatz hierzu wird in der Druckschrift postuliert, dass Maßnahmen, die die Drehungleichförmigkeit der Kurbelwelle ausgleichen sollen, bestens bekannt seien. Der Darstellung des Getriebes als Pufferglied zwischen der Kurbelwelle und der Nockenwelle ist zu entnehmen, dass durch das Getriebe lediglich eine Entkoppelung zwischen Kurbelwelle und Nockenwelle bewirkt werden soll. Das vorrangige Ziel bei einem System nach der DE 10 2006 001 258 A1 ist die Schwingungsreduzierung im Steuerkettentrieb.

Aus der DE 10 2007 043 610 A1 (Anmelderin: Audi AG; Anmeldetag: 13. 09. 2007) ist für ein Fahrzeug eine Brennkraftmaschine mit einem an einem Aggregat angeordneten Unwuchtgewicht zum Massenausgleich bekannt, wobei das Aggregat mit einer Kurbelwelle drehfest gekuppelt ist. Das Aggregat kann eine Starter-Generator-Einheit sein, die mit den Unwuchtgewichten zur außermotorischen Kompensation von Momenten- und Massenungleichverteilungen versehen sein kann, um Bauraum einzusparen. Der elektrische Teil kann als elektrische Aktivgruppe der Starter-Generator-Einheit ausgestaltet sein, wobei unterschiedliche elektrische Beschaltungen möglich sind. Nach welchen Kriterien die unterschiedlichen Beschaltungen vorteilhaft zu betreiben sind, lässt sich aber nicht der DE 10 2007 043 610 A1 entnehmen.

In der DE 602 25 009 T2, auch veröffentlicht als EP 1 402 160 B1 (Patentinhaberin: Ricardo UK Ltd.; Prioritätstag: 05.07.2001), wird eine Starter-Generator-Einheit mit einem Übersetzungsgetriebe beschrieben, das an der Ausgleichwelle angreift und mit einer gegenrotierenden Ausgleichswelle einen Momentenausgleich eines Verbrennungsmotors ausführt. Die Ausgleichswelle erstreckt sich parallel zur Kurbelwelle und dreht mit der gleichen Geschwindigkeit wie die Kurbelwelle, jedoch in entgegengesetzter Richtung. Mit einer solchen Vorrichtung kann ein zyklisches Moment auf den Verbrennungsmotor ausgeübt werden.

Eine weitere Einrichtung zum Ausgleichen freier Massenkräfte lässt sich der DE 10 2006 009 093 A1 (Anmelderin: Bayerische Motoren Werke AG; Anmeldetag: 28.02.2006) entnehmen, das für eine Kolbenbrennkraftmaschine eines Motorrades entwickelt worden ist. Eine Ausgleichswelle ist direkt über ein Zahnradgetriebe von einer Kurbelwelle angetrieben. Eine zweite Ausgleichswelle soll über einen zweiten Zahnradantrieb von der ersten Ausgleichswelle angetrieben werden. Eine der Ausgleichswellen arbeitet mit einer Rotorwelle eines Generators zusammen, die exzentrisch angeordnete Gewichte zum Ausgleich von Massenkräften zweiter Ordnung aufweist. Es wird also mit zwei Ausgleichswellen gearbeitet, um freie Massenkräfte an der Kurbelwelle zu kompensieren.

In der DE 199 35 825 A1 (Anmelderin: Tochigi Fuji Sangyo K.K.; Anmeldetag: 05. 08. 1999) wird ein Drehmoment-Ausgleichsmechanismus vorgeschlagen, wobei sich das vom Schwungrad-Kurbelwellensystem herrührende Rollmoment des Motors und ein in entgegengesetzter Richtung wirkendes, von einer in umgekehrter Richtung zur Kurbelwelle drehenden Umkehrwelle mit einer Schwungmasse herrührendes Rollmoment gegenseitig aufheben und so die Rollschwingungen des Motors gedämpft werden. Der Drehmoment-Ausgleichsmechanismus umfasst ein Getriebe zum Übertragen einer Rotations-Antriebsleistung zu der über das Getriebe mit einem Ende der Kurbelwelle verbundenen, sich in entgegengesetzter Richtung zur Kurbelwelle drehenden Umkehrwelle mit einer an ihr festgelegten Antriebsscheibe für eine Zusatzmaschine, wobei infolge der Trägheitsmomente der Umkehrwelle, der Scheibe und der Zusatzmaschine Rollschwingungen des Motors gedämpft werden. Die Zusatzmaschine kann ein Wechselstromgenerator sein, der einen Elektromotor aufweisen kann, dessen Drehzahl steuerbar ist, sodass eine Rotations-Trägheitsmasse zum Dämpfen der Rollschwingungen steuerbar ist. Hierbei lassen sich die Rotationsmasse in einem großen Bereich präzise steuern, z. B. als Variable einer von diversen Bedingungen wie der Drehzahl des Verbrennungsmotors, sodass dessen Schwingungen noch wirksamer gedämpft werden. Die Zusatzmaschine kann mit einer Drehzahlerhöhungsfunktion ausgestattet sein. Insgesamt soll die Anordnung außerhalb des Hauptantriebsstranges des Motors angeordnet sein. Die Anpassungsmöglichkeiten zum Verringern der Rollschwingungen sind begrenzt, sodass sich ein wirksamer Ausgleich der Rollmomente schwer realisieren lässt.

Es ist weiterhin bekannt, dass es Steuertrieb-Systeme mit Hybrid-Anordnungen auf dem, insbesondere deutschen, Markt gibt, bei denen neben Start-Stopp-Funktion, Generatorbetrieb, Boostbetrieb auch die Schwingungstilgung, jedoch ähnlich wie bei der DE 10 2006 001 258 A1 beschränkt auf Schwingungen im Kettentrieb, verfügbar ist.

### Erfindungsbeschreibung

Auf der einen Seite haben sich die Konstrukteure einer Verbrennungskraftmaschine Gedanken zu einer geeigneten Integration eines elektromechanischen Energiewandlers, wie eines Starter-Generators, in mit der Verbrennungskraftmaschine zu machen. Die Integration sollte in platzsparender Weise auch noch für eine Verbesserung der Laufruhe bzw. Laufkultur der, vorzugsweise gesamten, Verbrennungskraftmaschine und des, vorzugsweise gesamten, Fahrzeuges wie PKW bzw. Personenkraftfahrzeug, in das die Verbrennungskraftmaschine gegebenenfalls eingebaut ist, beitragen.

Die Lösung zahlreicher Aufgaben gelingt mit einem Antrieb gemäß Anspruch 1. Vorteilhafte Ausbildungen des erfindungsgemäßen Antriebes sind den abhängigen Ansprüchen zu entnehmen.

Ein Antrieb für einen Verbrennungsmotor umfasst zumindest eine Kurbelwelle, zumindest eine Nockenwelle und wenigstens zwei Räder. Die Räder können Zahnräder sein. Die Räder können auch Riemenscheiben oder Kettenräder sein. Auch Kombinationen von Zahnrädern, Riemenscheiben, Kettenrädern etc. in den unterschiedlichen Antrieben, wie Steuertrieb, sind umsetzbar. Ein Rad, auch als erstes Rad bezeichnet, ist mit der Kurbelwelle verbunden. Das erste Rad dient in einer Ausgestaltung als ein Abtriebsrad. Ein Rad, auch als zweites Rad bezeichnet, ist mit der Nockenwelle verbunden. Das zweite Rad dient, zumindest zeitweilig, als ein Antriebsrad. Die Räder sind Teil eines Getriebes. In vorteilhafter Ausgestaltung handelt es sich bei dem Getriebe um einen Umschlingungstrieb. In getriebeartiger Verbindung sind das mindestens eine erste Rad und das mindestens eine zweite Rad Teile unterschiedlicher Getriebe.

Vorteilhafte Ausbildungen lassen sich den nachfolgenden Darstellungen entnehmen, die jeweils für sich allein gesehen eigenständige, erfinderische Ideen verkörpern können.

Erfindungsgemäß ist ein Elektromotor mit einer Steuereinrichtung vorgesehen. Es könnte auch mehr als eine Elektromotor-Steuereinrichtungseinheit vorhanden sein. Es könnten auch mehrere, von einer oder von mehreren Steuereinrichtungen gesteuerte Elektromotoren vorhanden sein. Der Elektromotor ist versetzt von der mindestens einen Kurbelwelle angeordnet. Bei mehr als einer Kurbelwelle kann der Elektromotor versetzt zu allen Kurbelwellen angeordnet sein. Bei mehr als einer Kurbelwelle kann der Elektromotor auch in der Drehachse einer der Kurbelwellen, jedoch versetzt zu allen übrigen Kurbelwellen angeordnet sein. Der Elektromotor ist versetzt von der mindestens einen Nockenwelle angeordnet. Der Elektromotor ist versetzt zu dem zugehörigen ersten Rad angeordnet. Der Elektromotor ist versetzt zu dem zugehörigen zweiten Rad angeordnet. Der Elektromotor steht mittels eines Zwischenrades mit wenigstens einem der Räder der Kurbelwelle in Verbindung. Hierbei wird dass Schwungrad auch als Rad betrachtet. Das Zwischenrad ist Teil des Getriebes. Durch den Elektromotor in Verbindung mit der Steuereinheit können vorteilhafterweise die elektromechanischen und elektrodynamischen Eigenschaften der elektrischen Maschine, die auch ein Starter-Generator sein kann, so genutzt werden, dass eine Verbesserung der Laufruhe bzw. der Laufkultur des Verbrennungsmotors erzielbar ist.

Nach einem weiteren Aspekt weist der Elektromotor erfindungsgemäß eine Generatorwelle auf. Auf der Generatorwelle ist mindestens ein Ausgleichsgewicht angeordnet. Das Ausgleichsgewicht dient dem Massenausgleich. Durch die Kombination mindestens eines Elektromotors mit einer Steuereinrichtung, mindestens einer Generatorwelle und mindestens einem Ausgleichsgewicht sind freie Massenkräfte kompensierbar. Insbesondere sind dadurch freie Massenkräfte erster oder zweiter Ordnung kompensierbar. Durch den Elektromotor mit der Generatorwelle mit Ausgleichsgewichten sind in Verbindung mit der Steuereinheit vorteilhafterweise die mechanischen, elektromechanischen und elektrodynamischen Eigenschaften der elektrischen Maschine, die auch ein Starter-Generator sein kann, so nutzbar, dass eine wesentliche Verbesserung der Laufruhe bzw. der Laufkultur des Verbrennungsmotors erzielbar ist.

Nachfolgend werden noch weitere vorteilhafte Aspekte von weiteren Details einer erfindungsgemäßen Vorrichtung aufgezeigt.

Der Elektromotor ist von der Steuereinrichtung ansteuerbar. Die Ansteuerung mittels der Steuereinrichtung folgt Ansteuerfunktionen. Durch die Ansteuerung ist ein zusätzliches Drehmoment in das Getriebe einbringbar. Durch die Ansteuerfunktionen sind unterschiedliche zusätzliche Drehmomentverläufe in das Getriebe einprägbar. Das zusätzliche Drehmoment ist vorzugsweise ein dynamisch sich änderndes Drehmoment. Die Einprägung des zusätzlichen Drehmomentes dient dazu, um die jeweils nicht durch den Massenausgleich kompensierte Ordnung zu kompensieren. Der Massenausgleich zumindest einer bestimmten Ordnung wird durch das mindestens eine Ausgleichsgewicht bewirkt. Das Ausgleichsgewicht kann eine räumliche Ausdehnung aufweisen, mittels der der Massenausgleich günstig beeinflusst werden kann. Man kann in dem Zusammenhang der Einprägung des zusätzlichen Drehmomentes von einem zusätzlichen elektromechanisch bzw. elektrodynamisch ausgeführten Massenausgleich sprechen. Durch die Kombination des ausgleichsgewichtbewirkten Massenausgleichs mit dem zusätzlichen elektrodynamischen ausgeführten Massenausgleich durch die Ansteuerfunktionen der Steuereinrichtung lassen sich vorteilhafterweise mehr Ordnungen kompensieren als durch den ausgleichsgewichtbewirkten Massenausgleich alleine.

Nach einem weiteren Aspekt kann der Verbrennungsmotor mit Steuertrieb und Elektromotor in Bezug auf das Drehmoment so gestaltet sein, dass das Drehmoment ein zeitweilig statisches Drehmoment sein kann. Dies ist vorteilhaft im Hinblick auf die grundsätzliche Auslegungsregel, dass der Massenausgleich möglichst ein großes statisches Moment haben soll. Durch Aufbringung des statischen Momentes durch die im Vergleich zur Kurbelwelle wesentlich weniger Masse aufweisende Generatorwelle kann vorteilhafterweise gleichzeitig die Auslegungsregel, nach der der Massenausgleich ein kleines Trägheitsmoment haben soll, erfüllt werden.

Vorteilhafterweise ist die Generatorwelle als zylindrische Hohlwelle ausgebildet. Die Ausgestaltung als Hohlwelle hilft vorteilhafterweise, das Trägheitsmoment des Massenausgleichs zumindest ein wenig zu reduzieren. Weiterhin ist in einer Weiterbildung der Hohlraum der Hohlwelle massenmäßig zu nutzen.

Ausgleichsgewichte können günstigerweise im Inneren der zylindrischen Hohlwelle angeordnet werden. Dadurch wird vorteilhafterweise ein Anbringungsplatz für das mindestens eine Ausgleichsgewicht geschaffen, wobei sich dies besonders vorteilhaft auf die effiziente Nutzung des knappen Bauraums auswirkt.

Die Ausgleichsgewichte können auch im Äußeren der zylindrischen Hohlwelle angeordnet sein, beispielsweise endseitig, beispielsweise an einem Rad, wie dem Zwischenrad. Die Ausgleichsgewichte liegen z. B. am äußeren Ende, außen an der Hohlwelle. Auch eine Kombination von im Inneren und im Äußeren der zylindrischen Hohlwelle angeordneten Ausgleichsgewichten ist vorteilhaft.

Auch die Nutzung von mehr als einer Generatorwelle ist denkbar und möglich, wodurch vorteilhafterweise eine weitere, insbesondere räumlich variante, Versetzungsmöglichkeit und damit eine weitere Möglichkeit sowohl zum ausgleichsgewichtbewirkten Massenausgleich als auch zum elektrodynamisch ausgeführten Massenausgleich eröffnet wird. Die Massenausgleiche der mehreren Generatorwellen können dabei vorteilhafterweise jeweils auf unterschiedliche Ordnungen kompensierend wirken. Mehr als in Summe eine Generatorwelle kann sowohl bei einem einzigen Elektromotor, der mehr als eine Generatorwelle, beispielsweise einen Doppelläufer mit Umkehrwelle, aufweist, als auch bei mehreren Elektromotoren mit jeweils einer Generatorwelle realisiert werden. Im Falle von mehr als einer Generatorwelle, können auch mehr als ein Zwischenrad vorhanden sein, wobei die durch die Zwischenräder bewirkten Über- bzw. Untersetzungen unterschiedlich sein können.

Die Ausgleichsgewichte können vorteilhafterweise am Ende der zylindrischen Hohlwelle angeordnet sein. Dadurch ergibt sich eine einfache, auch nachträglich mögliche, Montagemöglichkeit.

Die Ausgleichsgewichte können am Rädertrieb integriert sein. Die Integration auf den Rädern ermöglicht vorteilhafterweise die Einstellung des Trägheitsmomentes nicht nur durch die Masse des mindestens einen Ausgleichsgewichtes, sondern auch durch dessen Abstand von seiner Drehachse.

Der Elektromotor kann vorteilhafterweise in die Druckölversorgung des Verbrennungsmotors integriert sein. Vorzugsweise umschließt die Druckölversorgung gekapselt den Elektromotor vollständig. Durch die Umspülung mit Öl aus der Druckölversorgung lässt sich vorteilhafterweise der Elektromotor ölgekühlt realisieren.

Das erste Rad sollte das Abtriebsrad sein. Das Abtriebsrad leitet ein Drehmoment in das Getriebe des Steuertriebes ein. Das zweite Rad ist ein Antriebsrad. Es wird von dem Getriebe des Steuertriebes angetrieben.

Der Elektromotor bzw. die Starter-Generator-Einheit ist besonders vorteilhaft platziert, wenn sie von einem Motorgehäuse des Verbrennungsmotors eingefasst ist. Die elektrische Maschine kann von dem Motorgehäuse dabei vollständig umschlossen sein. In diesem Fall ist der Elektromotor im Inneren des Verbrennungsmotors angeordnet. Diese Anordnung reduziert die massenbedingten Geräuschentwicklungen.

Die vorliegende Erfindung fördert die Laufruhe und die Gleichförmigkeit der rotatorischen Bewegungen in der Verbrennungskraftmaschine. Indem der Elektromotor einem Ansteuerungsprofil, das auf Momente unterschiedlicher Ordnung in der Verbrennungskraftmaschine abgestimmt ist, folgt, wirkt der Elektromotor den mechanischen, inhärenten Ungleichförmigkeiten der Verbrennungskraftmaschine entgegen.

Unter einem anderen Blickwinkel lässt sich die vorliegende Erfindung auch dahingehend beschreiben, dass Massenkräfte unterschiedlicher Ordnung durch den Antrieb für die Verbrennungskraftmaschine ausgeglichen werden. Hierzu weist der Antrieb ungleichförmig angebrachte Gewichte an einer Welle eines Elektromotors auf. Die Gewichte wirken den Massenkräften des Verbrennungsmotors entgegen. Die Gewichte lassen sich für statische bzw. periodisch auftretende Unwuchten der und auf der Kurbelwelle gegensteuern. Die Rotationsgeschwindigkeit lässt sich bei dem Elektromotor einstellen. Die Winkelgeschwindigkeit des Elektromotors lässt sich verändern. Die Winkelgeschwindigkeit wird in Abhängigkeit von einzelnen auftretenden Ordnungen der Massenungleichförmigkeiten des Verbrennungsmotors angepasst. Durch eine aktive Ansteuerung des Elektromotors bzw. der Generatorwelle lassen sich durch eine mit nur einer Welle ausgestatteten Ausgleichsvorrichtung, bei der Gewichte ungleichmäßig an der Welle, insbesondere an der Hohlwelle verteilt sind, Massenkräfte unterschiedlicher Ordnung während einer Rotation der Generatorwelle kompensieren.

Ein solcher Antrieb ist besonders gut für Kraftfahrzeugantriebe wie Personenkraftfahrzeuge geeignet. Ein standardmäßig vorhandener Elektromotor lässt sich als Massenausgleichssystem verwenden. Die Passagiere des Personenkraftfahrzeugs profitieren von einer erhöhten Laufruhe. Die Laufruhe lässt sich im Betrieb auf unterschiedliche Ordnungen anpassen. Mit den Gewichten an der Welle wird eine markante Unwucht dauerkompensiert. Mit der Ansteuerung des Elektromotors wird eine weitere Unwucht kompensiert. Zur Reduktion der Geräuschentwicklung ist der Antrieb in dem Verbrennungsmotor integriert.

Der Antrieb ist besonders gewichtsarm, wenn eine unmittelbare Verbindung zwischen Generatorwelle und Kurbelwelle durch direkten Zahneingriff gegeben ist. Der Antrieb greift über einen Zahnkranz unmittelbar, d. h. ohne Übersetzungsgetriebe, in ein Rad auf der Kurbelwelle ein. Das einzige einzustellende Übersetzungsverhältnis ergibt sich aus der Zahnübersetzung zwischen Zwischenrad und Rad auf der Kurbelwelle. Zwischen Generatorwelle mit dem Zwischenrad und Kurbelwelle mit Zahnrad ist kein weiteres Übersetzungsgetriebe oder Untersetzungsverhältnis vorhanden.

Das Zahnrad der Kurbelwelle ist vorteilhafterweise in einem mittleren Bereich der Kurbelwelle angeordnet. Die kompensierenden Drehmomente werden nicht an einem Ende der Kurbelwelle eingeleitet. Die Kompensation der Massenkräfte erfolgt durch eine in der Mitte der Kurbelwelle befindliche Zahnradanbindung. Torsionen in der Kurbelwelle werden minimiert. Die von den Pleuel eingeleiteten Antriebskräfte des Verbrennungsmotors werden beidseitig der Zahnradanbindung durch den Antrieb kompensiert.

Der erfindungsgemäße Antrieb lässt sich in dem Motorblock integrieren. Bei einer solchen Anordnung kapselt der Motorblock den Elektromotor. Der Elektromotor lässt sich in dem Ölkreislauf des Verbrennungsmotors integrieren. Der Elektromotor wird von dem internen Ölkreislauf des Verbrennungsmotors versorgt. Die Lager in dem Elektromotor werden mit dem Öl aus dem internen Ölkreislauf geschmiert. Es findet eine direkte, interne Druckölversorgung statt. Die Lager des Elektromotors sind druckölversorgt.

Genauso kann bei einer internen Anordnung des Elektromotors der Elektromotor einen Kühlwassermantelanschluss haben. Das Kühlwasser des Motorblocks hat einen Weg, der über einen Kühlwassermantelanschluss des Elektromotors führt. Der Elektromotor wird mit dem Kühlwasser des Motorblocks gekühlt. Der Elektromotor liegt in dem Motorblock. Der Elektromotor ist ein Teil des Motorblocks. Der Elektromotor greift in einem mittleren Bereich der Kurbelwelle an. Die Kurbelwelle wird von verschiedenen Pleueln angetrieben. Der mittlere Bereich der Kurbelwelle liegt dort, wo die Kurbelwelle beidseitig von Pleueln eingefasst ist. Der Elektromotor liegt mit seinem gesamten Gehäuse im Inneren des Motorblocks.

Die Erfindung zeigt auf, wie mit nur einer Ausgleichswelle, die zugleich eine Generatorwelle ist, Massenkräfte unterschiedlicher Ordnung kompensierbar sind.

### Figurenbeschreibung

Weitere vorteilhafte Eigenschaften und Ausbildungen der Erfindung werden anhand der im Folgenden erläuterten Zeichnungen beschrieben, die für sich gesehen auch eigenständige erfinderische Aspekte darstellen können. In diesen Zeichnungen zeigt
- Fig. 1: eine Schrägansicht auf einen erfindungsgemäßen Steuertrieb in einer ersten Ausführungsform mit einem Starter-Generator
- Fig. 2: einen teilweisen Längsschnitt durch den Starter-Generator aus Fig. 1, der mittels des erfindungsgemäßen Massenausgleichsgetriebes antriebs- und ausgleichsmäßig in den Motorsteuertrieb integrierbar ist,
- Fig. 3: einen teilweisen Längsschnitt durch einen Starter-Generator ähnlich Fig. 2, jedoch für eine modifizierte Ausführungsform eines erfindungsgemäßen Steuertriebes,
- Fig. 4: eine Schrägsicht auf eine beidendseitig der Generatorwelle mit zwei gegengleich angeordneten Ausgleichsgewichten ausgestattete Wicklungsanordnung, die in einem Elektromotor einer dritten Ausführungsform eines erfindungsgemäßen Steuertriebes verwendet werden kann,
- Fig. 5: eine Ausführungsform einer erfindungsgemäßen Anordnung des Elektromotors in dem Verbrennungsmotor und
- Fig. 6: eine weitere Ausführungsform einer erfindungsgemäßen Anordnung des Elektromotors in dem Verbrennungsmotor.

Nachfolgend werden unterschiedliche Ausführungsformen der Erfindung anhand der Figuren näher beschrieben.

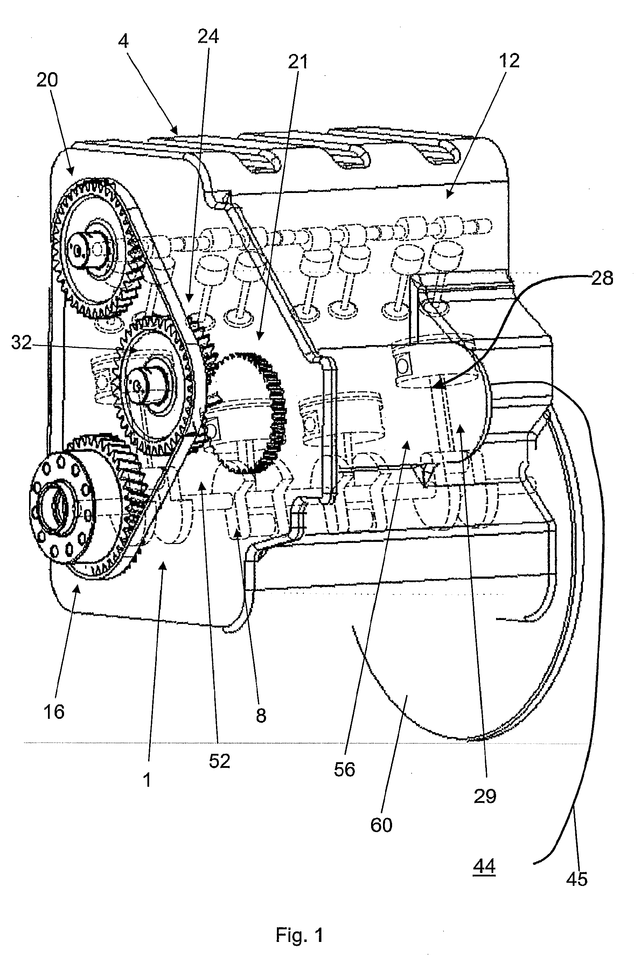

Fig. 1 zeigt eine Schrägansicht auf einen erfindungsgemäßen Steuertrieb 1 für einen Verbrennungsmotor 4 in einer ersten Ausführungsform. Dabei ist ein Starter-Generator 29, der in seiner Funktion als Starter als Elektromotor 28 arbeitet, in einen ersten Antrieb 1 integriert. Der Antrieb 1 ist in Form eines Getriebes 24 ausgestaltet, das als Massenausgleichsgetriebe fungiert. Das Getriebe 24 weist einen Rädertrieb 52 auf.

Der Verbrennungsmotor 4 weist eine Kurbelwelle 8 und eine Nockenwelle 12 auf, die in Fig. 1 lediglich andeutungsweise und schematisch dargestellt sind. In Realität umfassen die Kurbelwelle 8 bzw. die Nockenwelle 12 regelmäßig mehr Teile bzw. Funktionen als dargestellt. Weiterhin weist der Verbrennungsmotor 4 ein Schwungrad 60 auf.

Der Antrieb 1 umfasst mehrere Räder 16, 20, 21, 32. Die Räder 16, 20, 21, 32 bilden den Rädertrieb 52 des Getriebes 24. Das Rad 16 ist mit der Kurbelwelle 8 verbunden. Das Rad 20 wirkt mittelbar auf den Elektromotor28 ein. Hierzu gibt es eine Verbindung zwischen dem Rad 20 und dem Rad 21. Das Rad 21 ist mit dem Elektromotor 28 verbunden. Die Räder 16, 20, 21, 32 sind Teil von Getrieben 24, 26. Das Getriebe 24 verbindet die Räder 21 und 32 miteinander. Das Getriebe 24 verbindet insbesondere das erste Rad 16 und ein auf die Nockenwelle 12 einwirkendes Rad miteinander. Die Verbindungen sind teils mittels Zahnriemen, teils mittels Zahneingriff realisiert. Je nach motorischer Gestaltung könnten auch mehr als eine Nockenwelle 12 und demgemäß mehrere Räder vorhanden sein.

Der Elektromotor 28 ist mit einer Steuereinrichtung 44 verbunden. Die Steuereinrichtung 44 umfasst elektronische Bauelemente. Die elektronischen Bauelemente dienen der Realisierung von Ansteuerfunktionen des Elektromotors 28. Die Steuereinrichtung 44 arbeitet mit dem Steuergerät (nicht dargestellt) des Verbrennungsmotors 4 zusammen. Die Verbindung 45 von Elektromotor 28 und Steuereinrichtung 44 ist eine elektrische Verbindung. Die Verbindung 45 ist eine Bus-Verbindung. Die Verbindung 45 ist geeignet, Signale, wie die Ansteuerfunktionen, von der Steuereinrichtung 44 zum Elektromotor 28 zu übertragen. Es ist denkbar und möglich die Signale nicht leitungsgebunden zu übertragen. Die Signale könnten beispielsweise drahtlos von der Steuereinrichtung 44 zum Elektromotor 28 übertragen werden.

Der Elektromotor 28 ist in die Druckölversorgung 56 des Verbrennungsmotors 4 integriert. Die Druckölversorgung 56 umschließt hier gekapselt den Elektromotor 28 vollständig. Zudem ist der Elektromotor 28 teilweise in das Motorgehäuse 6 eingebunden.

Es kann ein Sensor vorhanden sein (nicht dargestellt), der zumindest den Betriebszustand des Elektromotors 28 abbilden kann. Der Sensor kann mit der Steuereinrichtung 44 verbunden sein. Der Betriebszustand des Elektromotors 28 kann auf diese Weise in die Ansteuerfunktionen der Steuereinrichtung 44 als Steuergröße eingehen. Die Steuereinrichtung 44 kann als Regeleinrichtung fungieren. Die Steuergröße kann eine Regelgröße sein.

Der Elektromotor 28 ist versetzt von der Kurbelwelle 8 angeordnet. Der Elektromotor 28 ist versetzt zur Nockenwelle 12 angeordnet. Der Elektromotor 28 ist versetzt zu dem ersten Rad 16 angeordnet. Der Elektromotor 28 ist versetzt zu dem zweiten Rad 20 angeordnet. Der Elektromotor 28 steht mittels eines Zwischenrades 32 mit den Rädern 16, 20 in Verbindung. Das Zwischenrad 32 ist ein Teil des Getriebes 24. Das Zwischenrad 32 ist ein Teil des Rädertriebes 52.

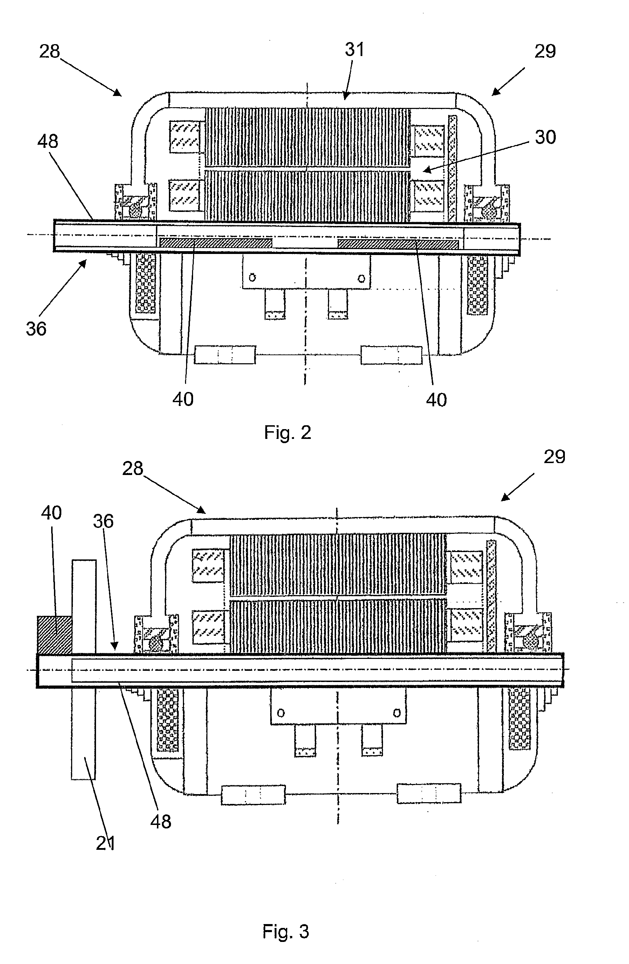

Fig. 2 zeigt einen Starter-Generator 29, der als Kurzschlussläufer konzipiert ist. Der Starter-Generator 29 weist eine Läuferwicklung 30 und eine Ständerwicklung 31 auf. Der Starter-Generator 29 kann als Elektromotor 28 arbeiten. Der Starter-Generator 29 kann als StromGenerator arbeiten. Der Starter-Generator 29 bzw. der Elektromotor 28 weist, wie Fig. 2 zeigt, eine Generatorwelle 36 auf. Die Generatorwelle 36 ist als Hohlwelle 48 ausgeführt. An der Hohlwelle 48 sind zwei Ausgleichsgewichte 40 für einen Massenausgleich angeordnet. Die Ausgleichsgewichte 40 sind im inneren Lumen der Hohlwelle angeordnet. Die Ausgleichsgewichte 40 sind an der inneren Mantelfläche der Hohlwelle angeordnet. Durch die Ausgleichsgewichte 40 sind freie Massenkräfte erster oder zweiter Ordnung im Antrieb 1 kompensierbar. Es könnten auch andere Ordnungen, wie eine 0,5-te Ordnung, kompensierbar sein.

Der Starter-Generator 29 umfasst in der Regel weitere Komponenten wie Lager, Lagerschilde, Ständereisen, Ständernuten, Läufernuten, Lüfter, Klemmbrett, Klemmkasten etc., die insbesondere in den Figuren 2 und 3, teilweise, wenn auch nicht extra angezogen, für den Fachmann erkennbar sind.

Der Elektromotor 28 ist von der Steuereinrichtung 44 (Fig. 1) ansteuerbar. Die Ansteuerung gestattet, dass ein zusätzliches Drehmoment in das Getriebe 24 einbringbar ist. Das Drehmoment kann ein dynamisch sich änderndes Drehmoment sein. Das zusätzlich eingeprägte Drehmoment dient dazu, die jeweils nicht durch den Massenausgleich kompensierte Ordnung zu kompensieren. Das Drehmoment ist ein zeitweilig statisches Drehmoment.

Fig. 3 zeigt einen teilweisen Längsschnitt durch einen Starter-Generator 29 ähnlich Fig. 2, jedoch in einer modifizierten Ausführungsform. Die Generatorwelle 36 trägt ein endseitig drehstarr mit ihr verbundenes drittes Rad 21. An dem dritten Rad 21 ist ein Ausgleichsgewicht 40 befestigt. Es könnte auch mehr als ein Ausgleichsgewicht 40 an dem dritten Rad 21 befestigt sein. Die Ausgleichsgewichte 40 sind somit in Fig. 3 am Ende der zylindrischen Hohlwelle 48 angeordnet.

Ausgleichsgewichte 40 könnten auch auf anderen Rädern des Rädertriebes 52 vorhanden sein, beispielsweise auf dem ersten Rad 16. Die Ausgleichsgewichte 40 können am Rädertrieb 52 integriert sein. Eine einstückige Ausbildung der Ausgleichsgewichte 40 mit einem, einigen oder allen Rädern des Rädertriebes 52 ist denkbar und möglich. Bei einer Anordnung, bei der die Ausgleichsgewichte 40 auch auf anderen Teilen des Getriebes 24, insbesondere des Rädertriebes 52, befestigt sind, erfolgt der zusätzliche Massenausgleich durch den Elektromotor 28 indirekt. Man kann in einem solchen Fall von einem indirekten zusätzlichen Massenausgleich sprechen.

Die Ausführungsformen der Figuren 2 und 3 können miteinander kombiniert werden. In diesem Fall sind die Ausgleichsgewichte 40 im Inneren und im Äußeren der zylindrischen Hohlwelle 48 angeordnet. Außen an der Generatorwelle 36 angebrachte Ausgleichsgewichte 40 müssen nicht wellenendseitig angebracht sein. Außen an der Generatorwelle 36 angebrachte Ausgleichsgewichte 40 können auch beabstandet vom Wellenende, beispielsweise mittig auf der Generatorwelle 36, sitzen. Auch im Inneren der Hohlwelle 48 angebrachte Ausgleichsgewichte 40 können wellenendseitig oder beabstandet vom Wellenende, beispielsweise mittig, in der Welle sitzen. Ausgleichsinnengewichte 40 können auch wellenendseitig und beabstandet vom Wellenende angeordnet sein. Auch eine Anordnung von inneren bzw. äußeren Ausgleichsgewichten 40 in Symmetrie oder in Antisymmetrie zu einem bestimmten Punkt oder mehreren bestimmten Punkten der Welle 36, 48, wie der Wellenlängsmitte, sind denkbar und möglich. Ausgleichsgewichte 40 können einstückig mit dem Teil, wie der Welle 36, 48, auf dem sie angeordnet sind ausgebildet sein.

Ausgleichsgewichte 40 könnten auch durch massenausgleichend wirkende, geeignet unwuchtig ausgestaltete Wicklungen 30, 31 des Elektromotors 28 realisiert sein. Die Unwucht der Wicklungen kann mittels unwuchtiger Gestaltung des Magneteisens der Wicklungen realisiert sein. Beispielsweise könnten auf dem Magneteisen Ausgleichsgewichte 40 sitzen. Insbesondere können Ausgleichsgewichte 40 auf dem Läufereisen sitzen. Ausgleichsgewichte 40 können auch bzw. zusätzlich, in einer weiteren Ausgestaltungsform, auf dem Läufereisen sitzen. Wuchtige Magnetabschnitte der Wicklungen, wie der Magneteisen, können in, beispielsweise magnetische, Wechselwirkung mit Ausgleichsgewichten 40 auf bzw. in der Welle 36, 48 treten. Auf diese Weise können Ausgleichsgewichte 40 zumindest teilweise den zusätzlichen Massenausgleich ausführen. Ausgleichsgewichte 40 können selbst als Magnete, beispielsweise als Dauermagnete, ausgebildet sein. Als Magnete ausgebildete Ausgleichsgewichte 40 können zumindest teilweise den zusätzlichen Massenausgleich mittels Magnetwirkung ausführen. Die Unwucht der Wicklungen kann mittels unwuchtiger Gestaltung des Leitungsmediums der Spule, wie dem Kupferdraht, realisiert sein. Auch eine Kombination beider Wicklungsunwucht-Ausbildungen ist denkbar und möglich.

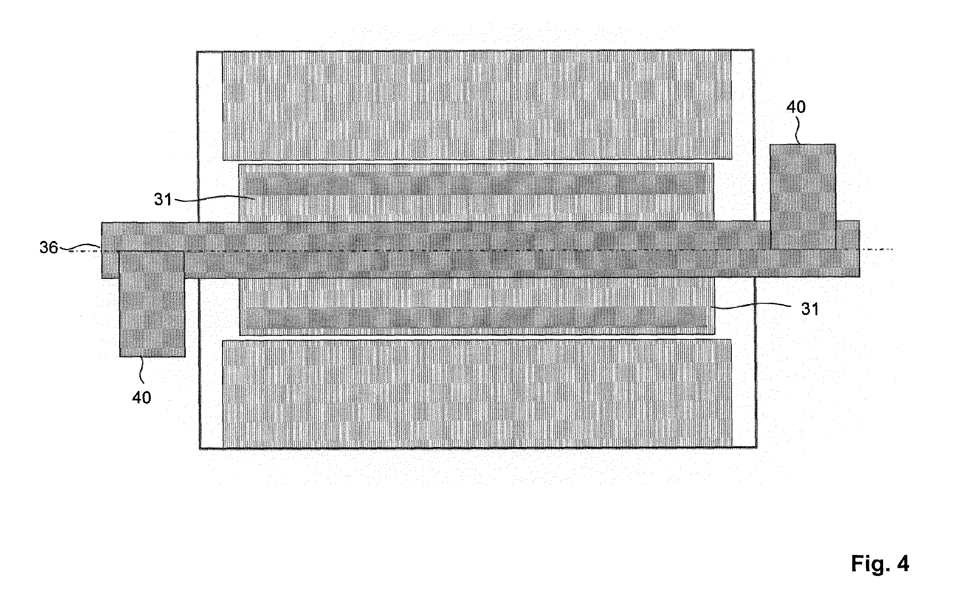

Fig. 4 zeigt eine Generatorwelle 36 eines Starter-Generators mit Ständerwicklungspaketen 31 in Schrägsicht, die beidendseitig mit zwei gegengleich angeordneten Ausgleichsgewichten 40 ausgestattet ist.

Die in den Fig. 2, 3 und 4 dargestellten Einzelaspekte lassen sich auf vorteilhaft zu einem einzigen Starter-Generator kombinieren.

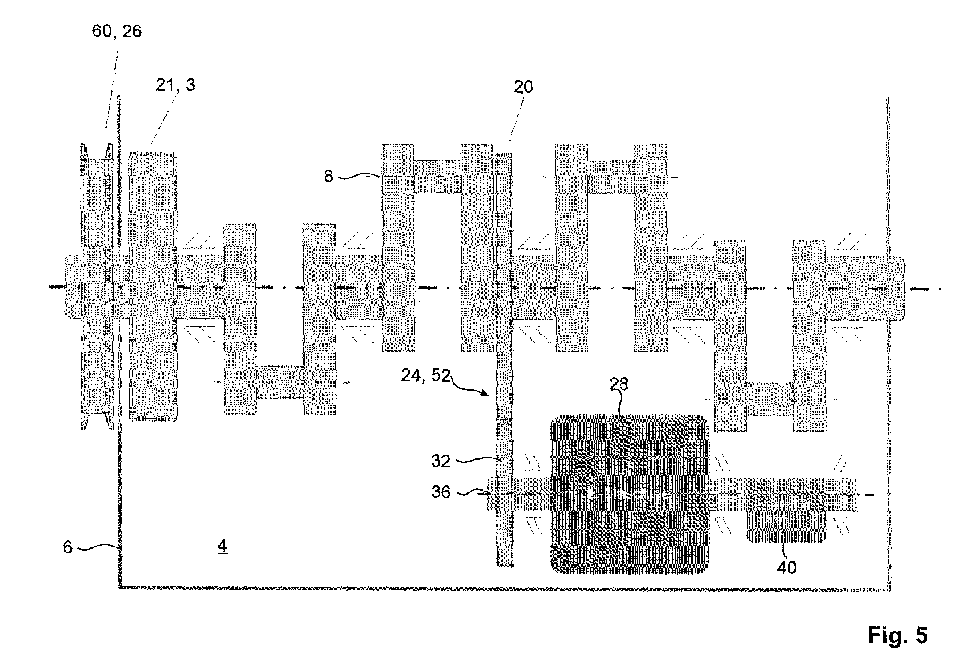

In Figur 5 ist der Verbrennungsmotor 4 durch sein Motorgehäuse 6 dargestellt. In dem Motorgehäuse 6 ist - neben weiteren Komponeten wie der Kurbelwelle 8 - der Elektromotor 28 angeordnet. Der Elektromotor 28 hat wenigstens ein Ausgleichsgewicht 40. Das Ausgleichsgewicht 40 sitzt auf der Generatorwelle 36. An der Generatorwelle 36 ist zusätzlich das Zwischenrad 32 befestigt. Das Zwischenrad 32 ist Teil des Rädertriebs 52, das das erste Getriebe 24 ausmacht. Das Zwischenrad 32 kämmt daher mit einem weiteren Rad 20. Das Rad 20 sitzt auf der Kurbelwelle 8. Auf der Kurbelwelle 8 sind weitere Räder 21, 60 angeordnet. Die weiteren Räder 21, 60 bilden den Teil eines Steuertriebs 3 oder stellen ein Getriebe 26 dar, zu dem z. B. auch ein Keilriementrieb gehört.

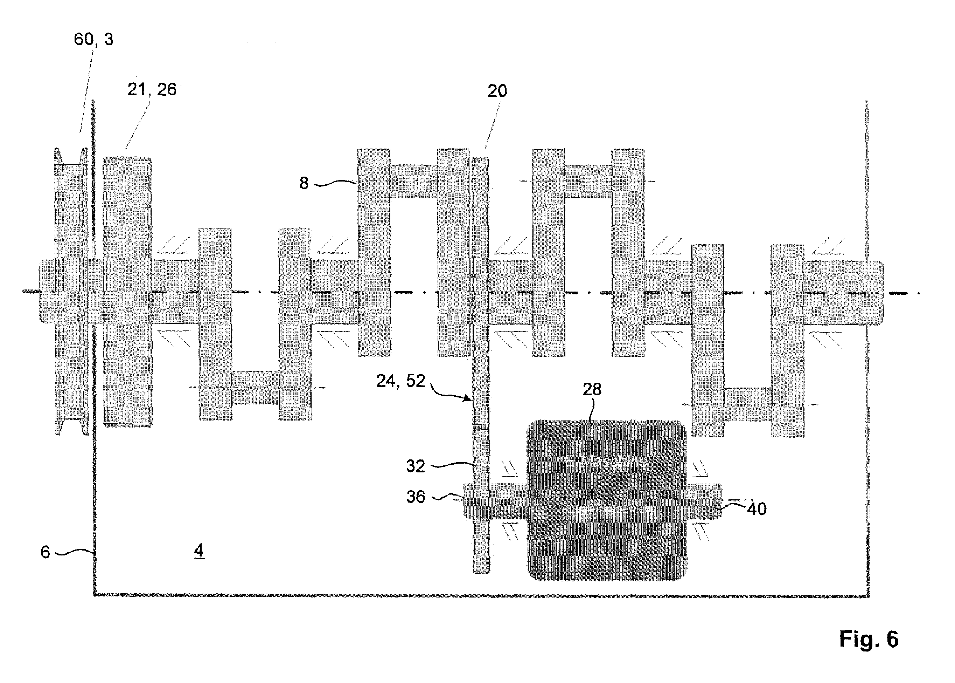

Figur 6 zeigt ein weiteres Ausführungsbeispiel mit Elektromotor 28. Der Elektromotor 28 hat eine Generatorwelle 36. Die Generatorwelle 36 ist entlang ihrer Erstreckung mit Ausgleichsgewichten 40 ausgestattet. So kann der Elektromotor 28 über den Rädertrieb 52, der sich aus einzelnen, im Eingriff stehenden Rädern 32, 20 zusammensetzt, auf die Kurbelwelle 8 Momente unterschiedlicher Ordnung aufbringen. Durch die Anordnung des Elektromotors 28 in dem Motorgehäuse 6 des Verbrennungsmotors 4 zeichnet sich ein erfindungsgemäßer Verbrennungsmotor 4 durch reduzierte Geräuschentwicklung aus. Neben dem Getriebe 24, das die Ausgleichsmomente auf die Kurbelwelle 8 überträgt, hat die Kurbelwelle 8 andere Triebe wie einen Steuertrieb 3 oder ein Getriebe 26. Als Teil des Steuertriebs 3 hat die Kurbelwelle ein Rad 21. Für einen weiteren Abtrieb lässt sich auch das Schwungrad 60 nutzen.

Die Erfindung umfasst wie dargestellt die Ausführung der Ausgleichswellen als Ankerwelle des Starter-Generators. Die Erfindung ermöglicht eine Integration der Massenausgleichswelle in die Starter-Generator-Rotorwelle. Die Erfindung ermöglicht eine Integration der Starter-Generator-Rotorwelle in die Welle bzw. in die Wellen eines Massenausgleichgetriebes. Eine Ausführung der Ausgleichswelle als Ankerwelle des Starter-Generators und eine Simulation bzw. Einprägung der weiteren notwendigen Kompensationen durch eine definierte Ansteuerung des Starter-Generators sind vorgestellt worden. Ein Entfall des Massenausgleichgetriebes durch die Verwendung eines oder mehrerer Starter-Generatoren zur Simulation der Massenkräfte durch die elektrische Maschine ist durch die Erfindung möglich. Der Ausgleich kann direkt und / oder indirekt im Bauraum des Massenausgleichgetriebes ausgeführt werden.

Die Erfindung bietet eine Reduktion der Bauteilezahl. Die Erfindung bietet eine Realisierung des Massenausgleichs durch eine oder zwei oder mehr als zwei Generatorbaugruppen mit integriertem Massenausgleich. Es sind keine weiteren Ketten-, Zahnrad- oder Riementriebelemente notwendig. Eine Erhöhung der Reibleistung durch zusätzliche Riemenoder Kettentriebe - sogar eine Reduktion durch den Entfall - ist erzielbar. Die Realisierung der Starter-Generatorfunktionen kann vorteilhafterweise im Bauraum der Ausgleichsgetriebe erfolgen. Eine Reduktion der notwendigen Massen ist möglich. Eine Optimierung der Dynamik, insbesondere mittels einer Boostfunktion, ist gleichfalls möglich. Auf eine zweite Ausgleichswelle kann in bestimmten Fällen verzichtet werden. Beispielsweise kann eine zweite Ausgleichswelle bei Vierzylinder-Triebwerken entfallen, wobei durch die elektrische Maschine eine Simulation bzw. Einprägung der Massenkräfte 2. Ordnung, welche sonst durch zwei gegenläufige Wellen dargestellt werden müsste, erfolgen kann, wobei weiterhin eine Nutzung der ersten Ordnung mit modifizierten Massenverteilungen in der Hohlwelle möglich ist. Es wird eine Möglichkeit des Feinabgleichs im Motorbetrieb geschaffen. Die Erfindung reduziert die Ansprüche an die notwendige Fertigungstoleranz. Die Erfindung ermöglicht eine adaptive Geräuschbeeinflussung und damit ein aktives Sounddesign. Die Erfindung kann in Lastabhängigkeit des Motorlaufes auch umgekehrt zu den Ausgleichseffekten Vibrationen stimulieren, was ein aktives ingenieurmäßiges Design eines verbesserten Motorsporteindruckes ermöglicht.

Die dargestellte Erfindung umfasst neben den diversen Anordnungsmöglichkeiten und konstruktiven Realisationsansätzen zur Platzierung von Unwuchtgewichten an einer Starter-Generator-Einheit darüber hinaus den Vorteil, wahlweise bzw. in Kombination Drehmomente erster Ordnung und Drehmomente zweiter Ordnung der Verbrennungskraftmaschine unter Zuhilfenahme der Starter-Generator-Einheit zu kompensieren. Hierzu stehen die Drehmomente einer Ordnung durch die Platzierung von Unwuchtgewichten an einer geeigneten Stelle, wie z. B. innerhalb der Starter-Generator-Welle, zur Bildung eines Massenausgleichs in Summe an der Abtriebswelle, wie der Kurbelwelle, zur Verfügung. Die ungleichförmigen Drehmomente aufgrund der anderen Ordnung werden ggf. elektrisch kompensiert. Auch eine Kompensation durch magnetische Kraftwirkung ist denkbar und möglich.

### Bezugszeichenliste

- 1: Antrieb
- 3: Steuertrieb
- 4: Verbrennungsmotor
- 6: Motorgehäuse
- 8: Kurbelwelle
- 12: Nockenwelle
- 16: Rad, insbesondere erstes Rad
- 20: Rad, insbesondere zweites Rad
- 21: Rad, insbesondere drittes Rad
- 24: Erstes Getriebe
- 26: Zweites Getriebe
- 28: Elektromotor
- 29: Starter-Generator
- 30: Läuferwicklung
- 31: Ständerwicklung
- 32: Zwischenrad
- 36: Generatorwelle
- 40: Ausgleichsgewicht
- 44: Steuereinrichtung
- 45: Verbindung
- 48: Hohlwelle
- 52: Rädertrieb
- 56: Druckölversorgung
- 60: Schwungrad

## Patentansprüche

1. Antrieb (1) für einen Verbrennungsmotor (4),
mit einer Kurbelwelle (8), mindestens einer Nockenwelle (12), wenigstens zwei Rädern (16, 20),
die mit der Kurbelwelle (8) verbunden jeweils Teil eines Getriebes (24, 26) sind und eines (16) der Räder (16, 20) Teil eines Steuertriebs (3) ist,
**dadurch gekennzeichnet,**
- **dass** ein Elektromotor (28) mit einer Steuereinrichtung (44) vorgesehen ist, der versetzt von der Kurbelwelle (8) und der mindestens einen Nockenwelle (12), sowie versetzt zu dem zugehörigen ersten Rad (16) und dem zugehörigen zweiten Rad (20), mittels eines Zwischenrades (32) als Teil eines der Getriebe (24) mit einem (20) der Räder (16, 20) in Verbindung steht, und
- **dass** der Elektromotor (28) eine Generatorwelle (36) aufweist, an welcher mindestens ein Ausgleichsgewicht (40) für einen Massenausgleich angeordnet ist , wodurch freie Massenkräfte erster oder zweiter Ordnung im Verbrennungsmotor (4), insbesondere die auf die Kurbelwelle (8) einwirken, kompensierbar sind.

2. Antrieb nach Anspruch 1,
**dadurch gekennzeichnet, dass**
der Elektromotor (28) von der Steuereinrichtung (44) derart ansteuerbar ist, dass ein zusätzliches Drehmoment, das vorzugsweise ein dynamisch sich änderndes Drehmoment ist, in das Getriebe (24) einbringbar ist, um die jeweils nicht durch den Massenausgleich kompensierte Ordnung zu kompensieren.

3. Antrieb nach Anspruch 2,
**dadurch gekennzeichnet, dass**
das Drehmoment ein zeitweilig statisches Drehmoment ist.

4. Antrieb nach einem der vorhergehenden Ansprüche,
**dadurch gekennzeichnet, dass**
die Generatorwelle (36) als zylindrische Hohlwelle (48) ausgebildet ist.

5. Antrieb nach Anspruch 4,
**dadurch gekennzeichnet, dass**
die Ausgleichsgewichte (40) im Inneren und/oder Äußeren der zylindrischen Hohlwelle (48) angeordnet sind.

6. Antrieb nach Anspruch 4 oder 5,
**dadurch gekennzeichnet, dass**
die Ausgleichsgewichte (40) an einem Ende der zylindrischen Hohlwelle (48) angeordnet sind.

7. Antrieb nach einem der Ansprüche 1 bis 6,
**dadurch gekennzeichnet, dass**
die Ausgleichsgewichte (40) am Rädertrieb (52) integriert sind.

8. Antrieb nach einem der Ansprüche 1 bis 7,
**dadurch gekennzeichnet, dass**
der Elektromotor (28) in die Druckölversorgung (56) des Verbrennungsmotors (4) integriert ist,
die vorzugsweise gekapselt den Elektromotor (28) vollständig umschließt.

9. Antrieb nach einem der vorhergehenden Ansprüche,
**dadurch gekennzeichnet, dass**
das erste Rad (16) ein Abtriebsrad ist
und das zweite Rad (20) wenigstens zeitweilig als Antriebsrad genutzt wird.

10. Antrieb nach einem der vorhergehenden Ansprüche,
**dadurch gekennzeichnet, dass**
der Elektromotor (28) von einem Motorgehäuse (6) des Verbrennungsmotors (4) eingefasst ist, sodass insbesondere der Elektromotor (28) im Inneren des Verbrennungsmotors (4) angeordnet ist.

11. Antrieb nach einem der vorhergehenden Ansprüche,
**dadurch gekennzeichnet, dass**
der Antrieb (1) in einem mittleren Bereich der Kurbelwelle (8) eine Verbindung zwischen Kurbelwelle (8) und Generatorwelle (36) zur gegenseitigen Antriebsbeeinflussung herstellt.
